# EUROPÄISCHE PATENTANMELDUNG

(11) **EP 0 715 386 A1**
(43) Veröffentlichungstag der Anmeldung: **05.06.1996**
(21) Anmeldenummer: 95118747.5
(22) Anmeldetag: 29.11.1995
(51) Int. Cl.: H02G 15/117, H02G 15/10, G02B 6/44

(54) **Gehäuse mit elektrischen und elektronischen Funktionseinheiten**

(30) Priorität: 30.11.1994 DE 4442539
(71) Anmelder: Alcatel SEL Aktiengesellschaft, D-70435 Stuttgart (DE)
(72) Erfinder: Rössler, Franz, D-71282 Hemmingen (DE)
(74) Vertreter: Schätzle, Albin, Dipl.-Phys.

(57) **Zusammenfassung**

Bei einem aus Gehäuseunterteil (2) und Deckel (3) bestehenden Gehäuse (1), das zur Montage im Freien dient, hat das Gehäuseunterteil (2) zwei Kammern (5) und der Deckel (3) zwei dem Gehäuseunterteil (2) entsprechende Kammern (7).

Im Gehäuseunterteil (2) ist die Verkabelung fest installiert, während im bei Bedarf austauschbaren Deckel (3) die elektrischen und elektronischen Funktionseinheiten befestigt und durch Steckverbindungen (z.B. 18, 29) mit der Verkabelung im Gehäuseunterteil (2) lösbar verbunden sind.

## Beschreibung

Die Erfindung betrifft ein Gehäuse mit elektrischen und elektronischen Funktionseinheiten, insbesondere zur Verwendung in Systemen der Nachrichtentechnik.

Ein von optischen Kabelfernseh-Verteilsystemen her bekanntes HF-dichtes Gehäuse mit optischem Empfänger besteht gemäß Oberbegriff des Anspruchs 1 aus Gehäuseunterteil und abnehmbarem Deckel. Es enthält wenigstens zwei Kammern mit mehreren darin untergebrachten elektrischen und elektronischen Funktionseinheiten zur Verteilung von Signalen sowie eine entsprechende interne Verkabelung und hat in einer Gehäusewand mehrere Durchführungen und Steckanschlüsse für extern zugeführte Anschlußkabel.

Ist das Gehäuse mit dem optischen Empfänger beispielsweise an einem Mast im Freien befestigt, läßt sich im Störungsfall an den Funktionseinheiten in der Regel vor Ort keine Reparatur durchführen. Daher muß in einem solchen Fall die Verkabelung vom Gehäuse getrennt und die Verbindungen nach dem Gehäuseaustausch wieder neu hergestellt werden.

Der Erfindung liegt die Aufgabe zugrunde, ein Gehäuse mit elektrischen und elektronischen Funktionseinheiten zu schaffen, bei dem im Störungsfall ein rascher Austausch der Funktionseinheiten vornehmbar ist. Diese Aufgabe wird erfindungsgemäß mit den im Anspruch 1 angegebenen Merkmalen gelöst. Die Unteransprüche enthalten vorteilhafte Ausgestaltungen des Gehäuses mit entsprechender Anordnung der Funktionseinheiten. Mit der Erfindung erzielbare Vorteile sind der Beschreibung zu entnehmen.

Die Erfindung wird anhand eines in Zeichnungen dargestellten Ausführungsbeispieles wie folgt näher beschrieben. In den Zeichnungen zeigen:
- Fig. 1: ein HF-dichtes Gehäuse mit optischem Empfänger und Anschlußverkabelung, gemäß Schnittlinien A-A der Fig. 3 und B-B der Fig. 4;
- Fig. 2: das Gehäuse nach Fig. 1, gemäß Schnittlinien C-C der Fig. 3 und D-D der Fig. 4;
- Fig. 3: das Unterteil des Gehäuses der Fig. 1 und 2 in der Draufsicht;
- Fig. 4: den Deckel des Gehäuses der Fig. 1 und 2 mit Blick auf die Deckelinnenseite.

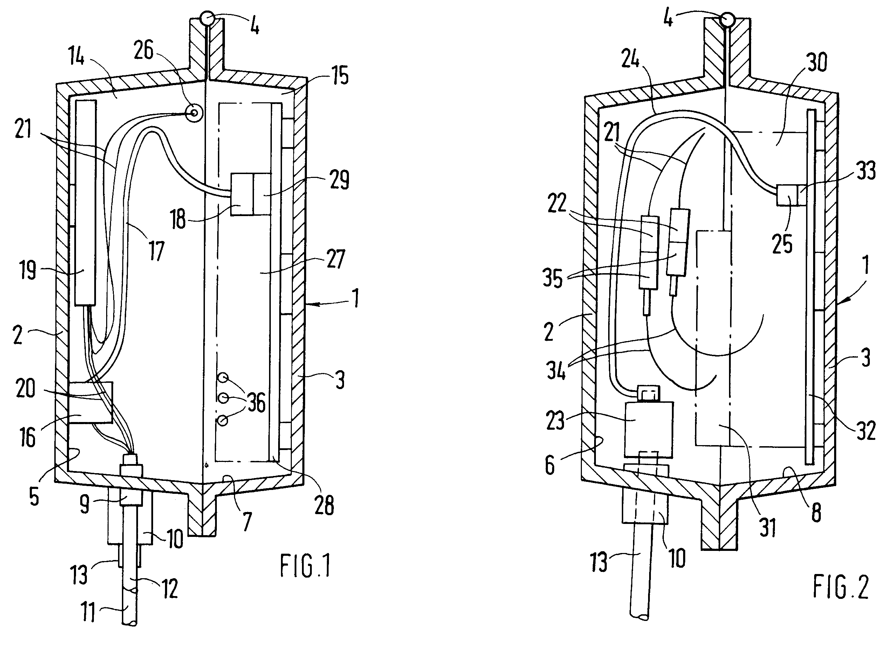

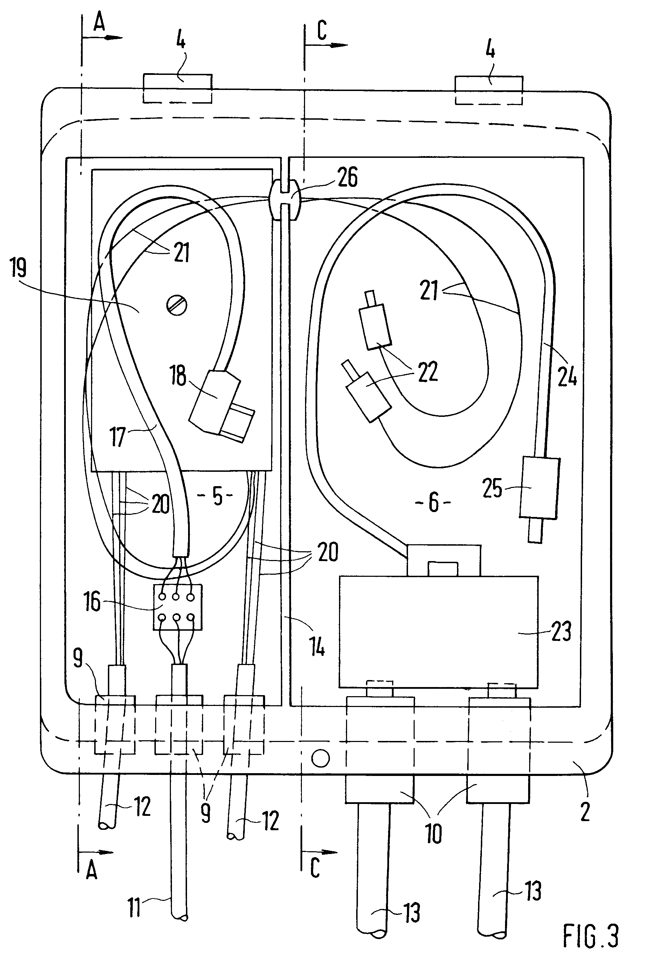

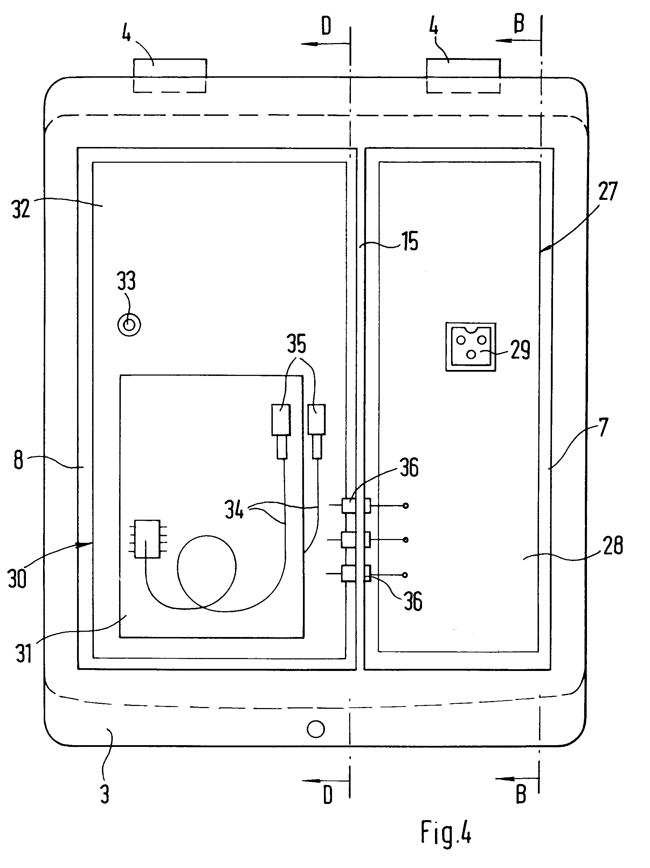

In den Fig. 1 und 2 ist das einen optischen Empfänger aufnehmende Gehäuse insgesamt mit 1 bezeichnet. Es besteht aus einem Gehäuseunterteil 2 und einem mit diesem verschraubbaren Deckel 3. Beide Teile sind aus Metalldruckguß hergestellt und vozugweise durch ein oder zwei Scharniere 4 miteinander verbunden. Das Gehäuseunterteil 2 hat wenigstens zwei Kammern 5, 6 und der Deckel 3 mit diesen korrespondierende Kammern 7, 8 (Fig. 3 und 4), die bei geschlossenem Gehäuse 1 HF-dicht sind. Üblicherweise ist eine in den Gehäuserand integrierte Dichtungsanordnung so beschaffen, daß die beiden im Gehäuse 1 von den Kammern 5, 7 und 6, 8 im Unterteil 2 und Deckel 3 gebildeten Hohlräume zugleich eine Abschirmung gegen elektromagnetische Beeinflussung und Schutz gegen Umwelteinflüsse haben.

Die zuvor erwähnten Scharniere 4 befinden sich in Einbaulage des Gehäuses 1 am oberen Rand und sie sind von einer Ausführung, die beim Aufklappen ein leichtes Aushängen und Abnehmen des Deckels 3 vom Gehäuseunterteil 2 gestatten beispielsweise in einer um 90° hochgeklappten Deckelstellung. Außerdem können die Scharniere 4 mit einer den Deckel 3 in z.B. um 180° hochgeschwenkter Lage haltenden Raststellung versehen sein.

In der den Scharnieren 4 gegenüber liegenden Seitenwand des Gehäuseunterteiles 2 sind mehrere Durchführungen 9 und Steckanschlüsse 10 für extern herangeführte Anschlußkabel vorgesehen. Bei den in Fig. 3 dargestellten Kabeln handelt es sich um ein Stromzuführungskabel 11 und zwei Glasfaserkabel 12, die in eine erste Kammer 5 münden und um zwei Koaxialkabel 13, deren Steckanschlüsse 10 in die zweite Kammer 6 münden. Je eine im Gehäuseunterteil 2 und im Deckel 3 vorgesehene Trennwand 14, 15 teilen das Gehäuse 1 somit in eine Kammer 5, 7 mit Einrichtungen zur Stromversorgung und in eine weitere Kammer 6, 8 mit HF-Einrichtungen, wobei im Gehäuseunterteil 2 im wesentlichen die Verkabelung und im Deckel 3 die elektrischen und elektronischen Funktionseinheiten angeordnet sind.

Zur Verkabelung, auch fest installierte Kabelanlage genannt, zählen beim vorliegenden Ausführungsbeispiel eine in der ersten Kammer 5 des Gehäuseunterteiles 2 angeordnete Anschlußklemme 16, ein elektrisches Verbindungskabel 17 mit Stecker 18, eine Spleißkassette 19, die optischen Adern 20 der Glasfaserkabel 12 und zwei in die zweite Kammer 6 führende optische Verbindungsadern 21 mit je einem Stecker 22. Außerdem kann zur Kabelanlage noch eine in der zweiten Kammer 6 auf die Steckanschlüsse 10 für Koaxialkabel 13 gesteckte Fernspeiseweiche 23 und ein an diese gestecktes Koaxialkabel 24 mit Stecker 25 zählen. In der Anschlußklemme 16 sind die Adern des Stromzuführungskabels 11 mit denen des Verbindungskabels 17 elektrisch und in der Spleißkassette 19 die Adern 20 der Glasfaserkabel 12 durch Spleiße mit den weiterführenden Verbindungsadern 21 optisch verbunden. Wie Fig. 3 zeigt, sind die optischen Verbindungsadern 21 von der Spleißkassette 19 in der ersten Kammer 5 durch eine Durchführung 26 in der Trennwand 14 in die zweite Kammer 6 geführt. Die Spleißkassette 19 kann ferner Spleiße enthalten, die dazu dienen, im Gehäuse 1 nicht benötigte Adern 20 der Glasfaserkabel 12 durchzuschleifen. Elektrisches Verbindungskabel 17, optische Verbindungsadern 21 und das interne Koaxialkabel 13 haben jeweils eine ausreichende Überlänge, so daß die vorgesehenen Verbindungen zu den Funktionseinheiten im aufgeklappten Deckel bequem hergestellt werden können.

Die zuvor erwähnten Funktionseinheiten sind insbesondere in Fig. 4 veranschaulicht. Danach ist in der ersten Kammer 7 des Deckels 3 eine kurz Converter 27 genannte Stromversorgung untergebracht. Diese besteht aus einer am Deckel 3 befestigten Leiterplatte 28, auf der unter anderem eine Steckfassung 29 für den Stecker 18 des stromführenden Verbindungskabels 17 angeordnet ist (Fig. 1).

In der zweiten Kammer 8 des Deckels 3 sind die elektronischen Funktionseinheiten untergebracht. Es sind dies ein optischer Empfänger 30 mit integriertem Verteilverstärker und ein Rückkanalmodul 31. Der Empfänger 30 besteht aus einer am Deckel 3 befestigten Leiterplatte 32, auf der unter anderem wenigstens eine Buchse 33 für den Stecker 25 des mit der Fernspeiseweiche 23 verbundenen Koaxialkabels 24 und das steckbar ausgebildete Rückkanalmodul 31 angeordnet sind. Empfänger 30 und Rückkanalmodul 31 haben je eine optische Anschlußader 34, die in je einen Stecker 35 münden, welche zur Verbindung mit den komplementären Steckern 22 der aus der Spleißkassette 19 herausgeführten Verbindungsadern 21 dienen (Fig. 2). Weil optischer Empfänger 30 und/oder Rückkanalmodul 31 bei geschlossenem Gehäuse 1 in den Raum der zweiten Kammer 6 des Gehäuseunterteiles 2 eintauchen, haben Gehäuseunterteil 2 und Deckel 3 relativ niedrige Seitenwände, wodurch das Gehäuse 1 verhältnismäßig flach ausgeführt sein kann. Die Versorgungsspannungen und HF-Signale werden über Abblockmittel, 36, wie Filter oder Kondensatoren, durch die Trennwand 15 der Kammern 7, 8 geführt.

Die räumlich getrennte Anordnung von Verkabelung und Funktionseinheiten im Gehäuse 1 haben den Vorzug, daß die Kabelanlage ohne Deckel 3, also ohne Funktionseinheiten, komplett installiert werden kann. Bis zur Montage des Deckels 3 läßt sich die Kabelanlage mit einer einfachen, billigen Abdeckung provisorisch verschließen und gegen Umwelteinflüsse schützen. Dies ist beispielsweise dann zweckmäßig, wenn die Montage des Gehäuseunterteiles 2 als Vorleistung geschieht, wobei das Anstecken der Fernspeiseweiche 23 mit dem zugehörigen Koaxialkabel 24 natürlich auch erst nach der Montage des Deckels 3 vorgenommen zu werden braucht.

Die Komplettierung des Gehäuses 1 ist sehr einfach vornehmbar. Hierbei wird der Deckel 3 lediglich in das Scharnier 4 eingehängt und in die offene Raststellung geschwenkt. Anschließend werden die vorgesehenen Steckverbindungen hergestellt, der Deckel 3 danach herruntergeklappt und mit dem Gehäuseunterteil 2 verschraubt.

Im Störungsfall läßt sich dagegen der Deckel 3 einschließlich elektrischer und elektronischer Funktionseinheiten mit wenigen Handgriffen gegen ein entsprechendes Ersatzteil austauschen, so daß die Anlage sehr schnell wieder funktionsfähig gemacht werden kann. Die kritischen Montagevorgänge des Leiterplattenaustauschs werden vom Einsatzort in eine entsprechend ausgerüstete Reparaturstelle verlagert.

## Patentansprüche

1. Aus Gehäuseunterteil und abnehmbarem Deckel bestehendes Gehäuse, bei dem in wenigstens zwei Kammern elektrische und elektronische Funktionseinheiten angeordnet sind und das mit Durchführungen und Steckanschlüssen für eine zugeführte Verkabelung versehen ist,
**dadurch gekennzeichnet,** daß der Deckel (3) dem Gehäuseunterteil (2) entsprechende Kammern (7, 8) hat und daß im Gehäuseunterteil (2) die Verkabelung und im Deckel (3) die elektrischen und elektronischen Funktionseinheiten angeordnet und durch Steckverbindungen (18/29, 22/35, 25/33) mit der Verkabelung verbunden sind.

2. Gehäuse mit Funktionseinheiten nach Anspruch 1, dadurch gekennzeichnet, daß Gehäuseunterteil (2) und Deckel (3) durch wenigstens ein aushängbares Scharnier (4) miteinander verbunden sind.

3. Gehäuse mit Funktionseinheiten nach Anspruch 2, dadurch gekennzeichnet, daß das Scharnier (4) in Einbaulage des Gehäuses (1) am oberen Rand angeordnet und mit einer den Deckel (3) in geöffneter Lage haltenden Raststellung versehen ist.

4. Gehäuse mit Funktionseinheiten nach Anspruch 1, dadurch gekennzeichnet, daß in einer ersten Kammer (5) des Gehäuseunterteiles (2) eine Anschlußklemme (16) mit elektrischem Verbindungskabel (17) und Stecker (18) für den Anschluß eines Converters (27) und eine Spleißkassette (19) mit in eine zweite Kammer (6) geführten optischen Verbindungsadern (21) und Steckern (22) für den Anschluß des optischen Empfängers (30) und eines Rückkanalmoduls (31) angeordnet sind.

5. Gehäuse mit Funktionseinheiten nach Anspruch 4, dadurch gekennzeichnet, daß in der zweiten Kammer (6) des Gehäuseunterteiles (2) eine Fernspeiseweiche (23) mit angeschlossenem Koaxialkabel (24) und Stecker (25) untergebracht sind.

6. Gehäuse mit Funktionseinheiten nach Anspruch 1, dadurch gekennzeichnet, daß in einer ersten Kammer (7) des Deckels (3) der Converter (27) befestigt ist, der eine Steckfassung (29) für den Stecker (18) des elektrischen Verbindungskabels (17) hat.

7. Gehäuse mit Funktionseinheiten nach Anspruch 1, dadurch gekennzeichnet, daß in einer zweiten Kammer (8) des Deckels (3) der optische Empfänger (30) mit Verteilverstärker sowie eine optische Anschlußader (34) mit Stecker (35) zur Verbindung mit dem Stecker (22) der von der Spleißkassette (19) zugeführten Verbindungsader (21) angeordnet sind.

8. Gehäuse mit Funktionseinheiten nach Anspruch 7, dadurch gekennzeichnet, daß der optische Empfänger (30) mit einer Buchse (33) für den Stecker (25) des mit der Fernspeiseweiche (23) verbundenen Koaxialkabels (24) versehen ist.

9. Gehäuse mit Funktionseinheiten nach Anspruch 7, dadurch gekennzeichnet, daß in der zweiten Kammer (8) des Deckels (3) ein Rückkanalmodul (31) mit Anschlußader (34) und Stecker (35) zur Verbindung mit einer von der Spleißkassette (19) zugeführten Verbindungsader (21) angeordnet ist.

10. Gehäuse mit Funktionseinheiten nach Anspruch 9, dadurch gekennzeichnet, daß das Rückkanalmodul (31) steckbar mit einer Leiterplatte (32) des optischen Empfängers (30) verbunden ist.
